# EUROPÄISCHE PATENTSCHRIFT

(11) **EP 3 879 761 B1**
(45) Veröffentlichungstag und Bekanntmachung des Hinweises auf die Patenterteilung: **07.06.2023**
(21) Anmeldenummer: 21171170.0
(22) Anmeldetag: 24.08.2018
(51) Int. Cl.: H04L 12/46, H04L 12/28, H05B 47/18, H04L 12/18, H04L 67/025, H04L 67/12, H04L 69/08

(54) **KOMMUNIKATIONSMODUL UND BELEUCHTUNGS-BUSSYSTEM MIT NETZWERKSCHNITTSTELLE**
COMMUNICATION MODULE AND LIGHTING SYSTEM WITH NETWORK INTERFACE
MODULE DE COMMUNICATION ET SYSTÈME DE BUS D'ÉCLAIRAGE POURVU D'INTERFACE RÉSEAU

(30) Priorität: 30.08.2017 DE 102017215125
(43) Veröffentlichungstag der Anmeldung: 15.09.2021
(62) Teilanmeldung aus: 18759314.0
(73) Patentinhaber: Tridonic GmbH & Co. KG, 6851 Dornbirn (AT)
(72) Erfinder: Ender, Markus, 6844 Altach (AT); Lochmann, Frank, 88147 Achberg (DE); Severin, Dieter, 6890 Lustenau (AT)
(74) Vertreter: Beder, Jens

(56) Entgegenhaltungen:
- DE-A1-102005 034 972
- US-B1- 6 735 619
- SEIFRIED STEFAN ET AL: "KNX IPv6: Design issues and proposed architecture", 2017 IEEE 13TH INTERNATIONAL WORKSHOP ON FACTORY COMMUNICATION SYSTEMS (WFCS), IEEE, 31. Mai 2017 (2017-05-31), Seiten 1-10, XP033129114, DOI: 10.1109/WFCS.2017.7991951
- Mdt Technologies Gmbh: "Technical Manual MDT DaliControl IP Gateway w/ Webinterface", , 1. Mai 2013 (2013-05-01), Seiten 1-99, XP055512364, 51766 Engelskirchen - Papiermühle 1 Gefunden im Internet: URL:https://www.mdt.de/download/MDT_TM_Dal iController_02.pdf [gefunden am 2018-10-04]

## Beschreibung

Die vorliegende Erfindung betrifft ein Kommunikationsmodul, ein Beleuchtungs-Bussystem und ein Verfahren zum Verbinden eines Beleuchtungs-Bussystems mit einem auf dem Internetprotokoll basierenden Netzwerk.

In der Gebäudetechnik können Beleuchtungssysteme Komponenten wie Sensoren, Leuchten, Betriebsgeräte, Aktoren, Schalter und Dimmer aufweisen, welche über ein Bussystem miteinander verbunden sind.

Bei einem Beleuchtungssystem gemäß dem DALI-Industriestandard (Digital Addressable Lighting Interface) kann für jede Komponente bzw. jeden Busteilnehmer eine zufällig generierte, und dann mit deren Hilfe eine fest vergebene Adresse für die Ansteuerung in dem Bussystem generiert werden. Jeder Busteilnehmer bzw. jede Komponente ist mit seiner/ihrer Adresse im Bussystem adressierbar und kann Steuerbefehle und/oder Statusinformation innerhalb des Bussystems senden und empfangen.

Die WO 2016/065382 A1 offenbart ein Bussystem, an dem mehrere Betriebsgeräte und ein Steuergerät zum Steuern der Betriebsgeräte angekoppelt sind, wobei das Steuergerät mit einem auf dem Internetprotokoll basierenden Netzwerk gekoppelt ist und aus diesem die Steuerbefehle für die Betriebsgeräte empfängt.

Die WO 2016/065382 A1 offenbart jedoch nicht, wie die Steuerbefehle dem jeweiligen Betriebsgerät zugeordnet werden bzw. die jeweilige Busadresse bestimmt wird, was für eine individuelle Steuerung der Betriebsgeräte nötig ist. Zudem sind für die Erzeugung von Steuerbefehlen oft Informationen zum aktuellen Betriebsstatus, der Konfiguration oder Eigenschaften der Betriebsgeräte nötig, welche von den Betriebsgeräten über das Netzwerk abgefragt werden müssen.

Ein Kommunikationsmodul gemäß dem Oberbegriff des beigefügten Anspruches 1 ist in der US 6 735 619 B1 beschrieben.

Die DE 10 2005 034972 A1 offenbart ein Verfahren zum Fernzugriff vom Internet auf ein lokales Netzwerk, bei dem in einem Vermittlungsknoten des Netzwerkes eine Adressumsetzung mit Hilfe einer Tabelle, die im Netzwerk vorhandenen Geräte sowie deren IP-Adressen anzeigt, erfolgt.

Stefan Seifried et al.: "KNX IPv6: Design issues and proposed architecture", 2017 IEEE 13th International Workshop on Factory Communication Systems (WFCS), 20170531 IEEE offenbart ein Verfahren zum Übertragen von Daten zwischen verschiedenen KNX-Bussystemen und ggf. auch einzelner KNX-IP-Geräte über ein Netzwerk (Internet) mittels KNXnet/IP-Router, bei dem die KNX-Protokoll Frames in die IP Frames eingefügt werden.

Eine Schnittstelle, die einen DALI-Bus mit einem KNX-Bus verbindet, ist in Mdt Technologies Gmbh: "Technical Manual MDT DaliControl IP Gateway w/ Webinterface" offenbart.

Der Erfindung liegt die Aufgabe zugrunde, ein Kommunikationsmodul, ein Beleuchtungssystem und ein Verfahren bereitzustellen, mit denen eine Verbindung eines Beleuchtungs-Bussystems mit einem auf einem Internetprotokoll basierenden Netzwerk für die Übermittlung oder Abfrage von Daten in einfacher und kostengünstiger Weise möglich ist. Dabei soll der Zugriff auf das Bussystem aus dem Netzwerk nur mit Hilfe von Standard-Internet Protokollen wie HTTP o.ä. möglich sein und zwar ohne die Besonderheiten des Bussystems und seiner Betriebsgeräte zu kennen.

Diese Aufgabe wird gemäß den Merkmalen der unabhängigen Ansprüche gelöst. Die Erfindung wird durch die Merkmale der abhängigen Ansprüche weitergebildet.

Die Erfindung betrifft ein Kommunikationsmodul zum Verbinden eines Beleuchtungs-Bussystems mit einem auf einem Internetprotokoll basierenden Netzwerk, wobei eine oder mehrere Komponenten an das Bussystem angekoppelt sind, jeder an dem Bussystem angekoppelten Komponente eine eindeutige Busadresse zugeordnet ist und zumindest eine in dem Bussystem abfragbare Eigenschaft zumindest einer Komponente eine über das Netzwerk zugängliche Ressource darstellt.

Dem Kommunikationsmodul können mehrere Netzwerkadressen zugeordnet sein, wobei zumindest eine der mehreren Netzwerkadressen die Busadresse einer Komponente enthält und das Kommunikationsmodul dazu ausgebildet ist, an die zumindest eine Netzwerkadresse gesendeten Daten aus dem Netzwerk zu empfangen, die Busadresse der Komponente aus der Netzwerkadresse zu extrahieren, an die Komponente mit der extrahierten Busadresse zu sendende Daten auf der Grundlage der Ressource und / oder den empfangenen Daten zu ermitteln und die ermittelten Daten an die Komponente mit der extrahierten Busadresse über das Bussystem zu übertragen, oder die von einer Komponente autonom erzeugten und an das Kommunikationsmodul gesendeten Daten über das Netzwerk zumindest einem Netzteilnehmer zur Verfügung zu stellen.

Gemäß dieser Ausführung der vorliegenden Erfindung ist jeder an dem Bussystem angekoppelten Komponente eine eindeutige Busadresse (Komponenten-ID) und dem Kommunikationsmodul mehrere Netzwerkadressen zugeordnet, wobei zumindest eine der mehreren Netzwerkadressen die Busadresse (Komponenten-ID) einer Komponente enthält und das Kommunikationsmodul dazu ausgebildet ist, an die zumindest eine Netzwerkadresse gesendete Daten aus dem Netzwerk zu empfangen, die Busadresse der Komponente aus der Netzwerkadresse zu extrahieren, an die Komponente mit der extrahierten Busadresse zu sendende Daten auf der Grundlage der empfangenen Daten (Ressourcen-Pfad der URL) zu ermitteln und in Daten oder Befehle zu übersetzen, diese übersetzten und ermittelten Daten an die Komponente mit der extrahierten Busadresse über das Bussystem zu übertragen.

Somit können die aus dem Netzwerk empfangenen Daten in einfacher Weise einer Komponente des Bussystems zugeordnet werden. Es ist keine Bestimmung der Busadresse beispielsweise auf der Grundlage des Typs des Steuerbefehls oder der Abfrage nötig. Dies bietet den Vorteil, dass für eine Abfrage die spezifischen Eigenschaften des Bussystems nicht bekannt sein müssen.

Das Kommunikationsmodul ist dazu ausgebildet, die von einer Komponente autonom erzeugten und an das Kommunikationsmodul gesendeten Daten (Steuerbefehle, Statusmeldungen) über das Netzwerk zumindest einem Netzteilnehmer zur Verfügung zu stellen. Das Übermitteln der Daten (Steuerbefehle, Statusmeldungen) an den Netzteilnehmer kann unmittelbar nach dem Empfang dieser Daten in dem Kommunikationsmodul oder auf Aufforderung des Netzteilnehmers hin erfolgen. Hierzu kann der Netzteilnehmer dem Kommunikationsmodul die Netzwerkadresse, an welche die Daten gesendet werden sollen, mitteilen. Beispielsweise kann dies einmalig bei der Installation beispielsweise über das Netzwerk mitgeteilt werden oder aufgrund einer Abfrage ermittelt werden. Das soll über eine spezielle Ressource "Callback URL" erfolgen, die für alle Komponenten vorhanden ist, die autonom Daten senden können. Zusätzlich oder alternativ kann der Netzteilnehmer das Kommunikationsmodul die Netzwerkadresse des Netzteilnehmers aus den von dem Netzteilnehmer empfangen Daten oder mittels einer Tabelle, welche der Busadresse der Komponente und/oder dem Steuerbefehl/der Statusmeldung zumindest eine Netzwerkadresse eines Netzteilnehmers zuordnet, ermitteln.

Die an dem Bus angekoppelten Komponenten können Sensoren, Leuchten, Betriebsgeräte, Aktoren, Schalter und/oder Dimmer sein, welche Steuer- und/oder Statusinformationen über den Bus übertragen.

Das Kommunikationsmodul kann dazu ausgebildet sein, die Adresse der Komponente aus dem Interface-Identifier der auf dem Internet Protocol Version 6 basierenden Netzwerkadresse zu extrahieren, wobei die Busadresse an einer bestimmten, dem Kommunikationsmodul bekannten Stelle der Netzwerkadresse eingefügt oder durch bestimmte Zeichen in der Netzwerkadresse markiert sein kann.

In dem Bussystem können mehrere Komponenten mittels einer Gruppen-Busadresse adressierbar sein, wobei das Kommunikationsmodul dazu ausgebildet ist, die Gruppen-Busadresse auf der Grundlage einer in der Netzwerkadresse enthaltenen Multicast-Adresse zu ermitteln und eine Datenübertragung an die der ermittelten Gruppen-Busadresse zugehörigen Komponenten auf der Grundlage der empfangenen Daten durchzuführen.

Das Kommunikationsmodul kann dazu ausgebildet sein, die Betriebsgeräte am Bussystem automatisch zu erkennen. Mit Hilfe einer im Datenspeicher hinterlegten Übersetzungstabelle werden die von den Betriebsgeräten bereitgestellten Services in Netzwerkressourcen übersetzt. Auch dies erfolgt automatisch. Diese Ressourcen können über das Rechnernetz angesprochen werden, um Daten der Betriebsgeräte abzufragen oder Befehle an Geräte zu senden um somit die Konfiguration der Geräte zu ändern. Somit kann transparent auf die Betriebsgeräte zugegriffen werden, ohne dass spezifische Befehle bekannt sein müssen. Auch das angeschlossene Bussystem wird somit für einen Zugriff aus dem Rechnernetz völlig irrelevant.

Das Kommunikationsmodul ist so ausgebildet, dass über eine "allgemeine bekannte Adresse" Informationen über die bereitgestellten Ressourcen abgefragt werden können. Über diesen Weg kann ein externes Gerät ohne Vorkenntnisse alle Informationen über das Bussystem und die angeschlossenen Betriebsgeräte ermitteln. Diese Informationen werden als hierarchisch organisierte Ressourcen-Pfade zur Verfügung gestellt, wobei zu jeder Ressource auch der Datentyp abgefragt werden kann.

Beispielsweise sind mehrere Betriebsgeräte an dem Bussystem angeschlossen und weisen eine spezifische Bus-Adresse erhalten auf. Das Betriebsgerät scannt das Bussystem und ermittelt die Typen und Adressen der angeschlossenen Betriebsgeräte. Die Busadresse im Bussystem wird in eine IPv6-Adresse übersetzt. Dann werden die von den Betriebsgeräten zur Verfügung gestellten Services mit Hilfe der im Datenspeicher hinterlegten Informationen ermittelt. Diese werden in Ressourcen-Pfade übersetzt, z.B. /Einstellung/Farbe. Die Kombination Netzwerkadresse/Ressourcen-Pfad bildet somit die URL, über den ein Service eines Betriebsgerätes genutzt werden kann.

Alternativ oder zusätzlich kann das Kommunikationsmodul dazu ausgebildet sein, aus den empfangenen Daten einen Steuerbefehl zu ermitteln und den ermittelten Steuerbefehl an die Komponente mit der extrahierten Busadresse bzw. die Komponenten mit der ermittelten Gruppen-Busadresse zu senden. Der Steuerbefehl kann in dem Ressourcen-Pfad der URL oder der Netzwerkadresse oder in einem anderen Teil der empfangenen Daten enthalten sein und kann ein Ein-, Ausschalt-Dimm-, Positions- oder Konfigurations-Befehl sein. Auf diese Weise ist es möglich, eine Leuchte oder Rollläden mit einem beispielsweise mobilen, mit dem Netzwerk verbunden Steuergerät (das auch ein Smartphone sein kann) aus der Ferne zu steuern.

Alternativ oder zusätzlich kann das Kommunikationsmodul dazu ausgebildet sein, als ein, zumindest aus Sicht des Netzwerks, transparentes Gateway eine Umwandlung des Datenpaketformats der empfangenen Daten in das Datenpaketformat des Bussystems durchzuführen. Dies erlaubt die Verbindung mehrerer, jeweils ein Kommunikationsmodul aufweisend Bussysteme über das Netzwerk.

Gemäß der vorliegenden Erfindung stellt zumindest eine in dem Bussystem abfragbare Eigenschaft zumindest einer Komponente eine über das Netzwerk zugängliche Ressource dar, die über einen URL erreichbar ist, wobei das Kommunikationsmodul dazu ausgebildet ist, wenn die empfangenen Daten eine Anfrage (z.B. mit einem Hypertext-Übertragungsprotokoll HTTP oder einem anderen Protokoll, wie CoAP, MQTT, LWM2M) der Ressource enthalten, die der angeforderten Ressource in einer Übersetzungs-Tabelle zugeordnete Eigenschaft der Komponente oder ein Bus-Kommando zum Abfragen dieser Eigenschaft zu bestimmen und diese Eigenschaft in der Datenübertagung ggf. mittels dem Bus-Kommando abzufragen.

Somit ist es möglich, im Internet der Dinge (IdD; IoT: Internet of things), Bus-Komponenten wie jedes andere IdD-Gerät über eine URL-Adresse zu adressieren und mit den gleichen Verfahren und Kommandos anzusteuern. Einige oder alle Eigenschaften der Komponenten, wie die Steuerbarkeit der Lichtintensität oder Farbtemperatur, sind hierbei als Ressourcen aus dem Netzwerk erreichbar.

Zusätzlich kann das Kommunikationsmodul dazu ausgebildet sein, ein oder mehrere Datenpakete mit von der Komponente empfangenen Informationen bezüglich der abgefragten Eigenschaft zu erzeugen, eine Netzwerkadresse für die Übertragung dieser Datenpakete auf der Grundlage der empfangenen Daten zu ermitteln und die Datenpakete an die ermittelte Netzwerkadresse zu senden. Das Kommunikationsmodul kann mit den von der Komponente empfangenen Informationen ein XML-Dokument oder ein anderes Dokument erzeugen und an die ermittelte Netzwerkadresse als Antwort auf die abgefragte Eigenschaft/Ressource senden.

Alternativ oder zusätzlich kann jeder Komponente mit zumindest einer abfragbaren Ressource eine Übersetzungs-Tabelle oder ein Tabellen-Eintrag zugeordnet sein, wobei das Kommunikationsmodul dazu ausgebildet ist, mit Hilfe der in der Netzwerkadresse enthaltenen Busadresse (Komponenten-ID) die jeweilige Übersetzungs-Tabelle bzw. den entsprechenden Tabellen-Eintrag für die Bestimmung der abzufragenden Eigenschaft zu ermitteln.

Gemäß der vorliegenden Erfindung ist das Bussystem ein DALI-Bus, bei dem zumindest eine Komponente eine als "DALI-Event-Message" bezeichnete Nachricht über das Bussystem senden kann, wobei die "DALI-Event-Message"-Daten den oben genannten von einer Komponente autonom erzeugten Daten entsprechen und der "DALI-Event-Message" eine Ressource "callback URL" zugeordnet ist, an der eine Adresse hinterlegt werden kann, an die dann die "DALI-Event-Message" oder in dieser Nachricht enthaltenen Informationen/Daten weitergeleitet wird.

Das Bussystem kann eine "Active Low" nutzen.

Alternativ oder zusätzlich kann das Kommunikationsmodul dazu ausgebildet sein, zumindest eine von einer Komponente zu einem bestimmten Ereignis an eine bestimmte Busadresse über das Bussystem gesendete Nachricht als autonom erzeugte Daten zu detektieren, eine der bestimmten Busadresse-zugeordnete Ressource und über diese eine Netzwerkadresse zu bestimmen und die Nachricht an die bestimmte Netzwerkadresse zu senden. Dies erlaubt eine Fernüberwachung von Komponenten und/oder die Ansteuerung busexterner, sich im Netzwerk befindlicher Geräte.

Gemäß der vorliegenden Erfindung weist ein Beleuchtungssystem ein Bussystem, mehrere an dem Bussystem angekoppelte Komponenten und zumindest eines der oben beschriebenen Kommunikationsmodule auf.

Gemäß einer Ausführung der vorliegenden Erfindung kann ein Verfahren zum Übertragen von Daten zwischen zumindest einer an einem Beleuchtungs-Bussystem angekoppelten Komponente und einem Teilnehmer eines auf einem Internetprotokoll basierenden Netzwerks, bei dem das Bussystem über eine Schnittstelle an das Netzwerk angekoppelt ist, jeder an dem Bussystem angekoppelten Komponente eine eindeutige Busadresse zugeordnet ist, der Schnittstelle mehrere Netzwerkadressen zugeordnet sind und zumindest eine der mehreren Netzwerkadressen die Busadresse einer Komponente enthält, folgende Schritte aufweisen:
- Empfangen von aus dem Netzwerk an die zumindest eine Netzwerkadresse gesendeten Daten von der Schnittstelle,
- Extrahieren der Busadresse der Komponente aus der Netzwerkadresse,
- Bestimmen der der angeforderten Ressource zugeordneten Eigenschaft der Komponente,
- Ermitteln von an die Komponente mit der extrahierten Busadresse zu sendenden Daten auf der Grundlage der empfangenen Daten und
- Übertragen der ermittelten Daten an die Komponente mit der extrahierten Busadresse über das Bussystem.

Gemäß der vorliegenden Erfindung wird zumindest eine in dem Bussystem abfragbare Eigenschaft zumindest einer Komponente eine über das Netzwerk zugängliche Ressource darstellen, die über einen URL erreichbar, wobei wenn die empfangenen Daten eine http-Anfrage der Ressource von einem Netzteilnehmer enthalten, in dem Verfahren folgende Schritte ausgeführt werden:
- Bestimmen der der angeforderten Ressource in einer Tabelle zugeordneten Eigenschaft der Komponente,
- Empfangen von Informationen zu der in der Datenübertagung abgefragten Eigenschaft von der Komponente,
- Erzeugen eines Datenpakets mit den empfangenen Informationen,
- Ermitteln einer Netzwerkadresse für die Übertragung der Daten auf der Grundlage der empfangenen Daten, und
- Senden des Datenpakets an die ermittelte Netzwerkadresse.

Nachfolgend wird die Erfindung anhand der beiliegenden Zeichnungen näher erläutert. Es zeigen:
Fig. 1 ein Beleuchtungssystem nach einem ersten Ausführungsbeispiel gemäß der vorliegenden Erfindung,
Fig. 2 eine vereinfachte Schaltung des Kommunikationsmoduls nach einem Ausführungsbeispiel gemäß der vorliegenden Erfindung,
Fig. 3 eine schematische Darstellung eines Beleuchtungssystems nach einem zweiten Ausführungsbeispiel gemäß der vorliegenden Erfindung,
Fig. 4 ein vereinfachtes Diagramm zur Darstellung des Verfahrens nach einem Ausführungsbeispiel, und
Fig. 5 ein vereinfachtes Diagramm zur Darstellung des Verfahrens nach einem weiteren Ausführungsbeispiel.

Komponenten mit gleichen Funktionen sind in den Figuren mit gleichen Bezugszeichen gekennzeichnet.

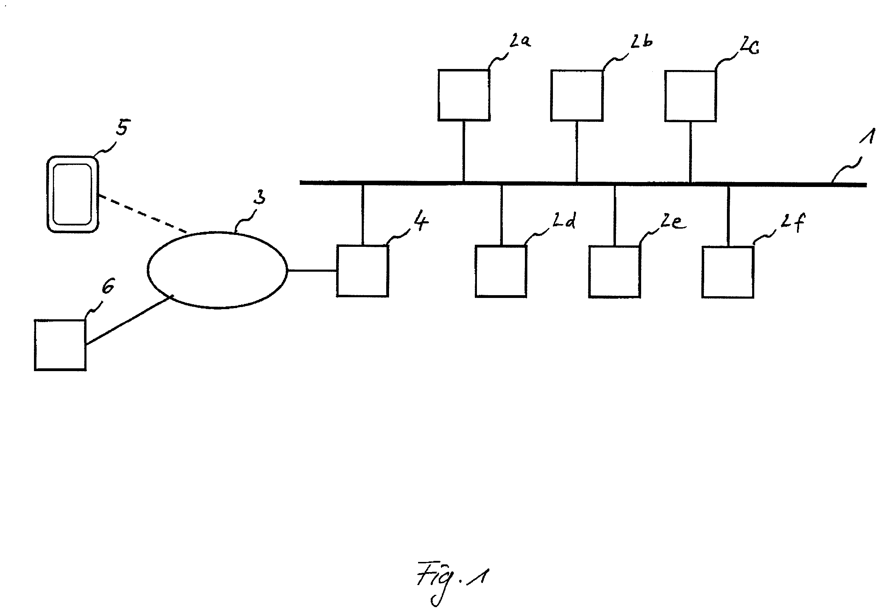

Fig. 1 zeigt den möglichen Aufbau eines Beleuchtungssystems gemäß der vorliegenden Erfindung. Das System weist einen Datenbus 1, eine Vielzahl von an dem Datenbus 1 angeschlossenen Komponenten 2a..2f und ein mit dem Datenbus 1 und einem auf einem Internetprotokoll basierenden Netzwerk 3 verbundenes Kommunikationsmodul 4 auf.

Der Datenbus 1 kann ein Bussystem gemäß dem DALI-Industriestandard sein, über das die Komponenten 2a..2f, wie Leuchten-Betriebsgeräte, Lichtsensoren, Bewegungssensoren, Taster und Steuergeräte, Steuerbefehle und Betriebsdaten übertragen. Gemäß dem DALI 2 Standard müssen Sensoren, wie Helligkeitssensoren und Bewegungssensoren für die Ansteuerung von Leuchten-Betriebsgeräte nicht mehr von einem Steuergerät abgefragt werden, sondern können selbst Steuerbefehle an ein Betriebsgerät senden, um beispielsweise eine Leuchte einzuschalten. Damit mit einem an dem Datenbus 1 angekoppelten und ebenfalls der Leuchte zugeordneten Taster die Leuchte wieder ausgeschaltet werden kann, ohne dass der Taster zweimal betätigt werden muss, kann dem Taster der Einschaltsteuerbefehl des Sensors oder der Betriebszustand der Leuchte mittels einer sogenannten "DALI Event Message", also einer Nachricht über ein bestimmtes Ereignis, über den Datenbus 1 mitgeteilt werden. Auf diese Weise kann der Taster ermitteln, dass die Leuchte bereits leuchtet und bei einen Tastendruck nicht ein- sondern ausgeschaltet werden soll.

Der Datenbus 1 kann ein Bussystem mit einer "Active Low" Übertragung nutzen. Vorzugsweise ist eine Energieversorgung von angeschlossenen Komponenten 2a..2f wie beispielsweise Sensoren über den Datenbus 1 möglich. Der hohe Pegel (High-Pegel) kann in dem Bereich von 12V-20,5V liegen. Beispielsweise weist das Bussystem auf dem Datenbus 1 eine Übertragungsgeschwindigkeit bis 1,2kbit auf.

Das in Fig. 1 gezeigte Netzwerk 3 ist ein Rechnernetz, in dem Nutzdaten in Paketen versendet und in dem nach einem Schichtenmodell Steuerinformationen verschiedener Netzwerkprotokolle ineinander verschachtelt um die eigentlichen Nutzdaten herum gemäß dem Internet Protocol Version 6 (IPv6) übertragen werden.

Ein mobiles Steuergerät 5 ist über eine Funkverbindung mit dem Netzwerk 3 verbindbar und dient zum Abfragen von Status- und Betriebsdaten der Komponenten 2a..2f und zur Steuerung zumindest einiger der Komponenten 2a..2f. Das Steuergerät 5 kann ein Smartphone, ein Personal Digital Assistant (PDA) oder ein Tabletcomputer sein, das bzw. der über eine Mobilfunkverbindung oder ein lokales Funknetz (WLAN) an das Netzwerk 3 ankoppelbar ist und auf dem mittels einer grafischen Benutzerschnittstelle die Status- und Betriebsdaten abgefragt und angezeigt sowie Steuerbefehle an die einzelnen Komponenten 2a..2f gesendet werden können. Alternativ ist selbstverständlich auch eine nicht mobile Lösung, z.B. ein PC, denkbar.

Mit dem Netzwerk 3 ist auch ein Sensor 6 verbunden, der sich außerhalb des Gebäudes befinden kann, in welchem der Datenbus 1 installiert ist, und der Steuerbefehle an zumindest eine Komponente 2a..2f über das Netzwerk 3, das Kommunikationsmodul 4 und den Datenbus 1 sendet. Der Sensor 6 kann ein Windsensor sein, der einen Antrieb einer Markise als eine Komponente 2a..2f ansteuert.

Das Kommunikationsmodul 4 kann ein Gateway sein und ermöglicht eine transparente Übertragung der Steuerbefehle und Abfragen von dem Steuergerät 5 und dem Sensor 6 an die gewünschte Komponente 2a..2f. Transparent bedeutet hierbei, dass zumindest einige der Komponenten 2a..2f von dem Steuergerät 5 und dem Sensor 6 über Netzwerkadressen gemäß dem Internet Protocol Version 6 (IPv6) ansprechbar sind, obwohl innerhalb des Datenbusses 1 jede Komponente 2a..2f nur über ihre eindeutige Busadresse/DALI-Adresse ansprechbar ist.

Gemäß der vorliegenden Erfindung sind dem Kommunikationsmodul mehrere Netzwerkadressen zugeordnet, wobei zumindest eine der mehreren Netzwerkadressen die Busadresse (DALI-Adresse) einer Komponente 2a..2f enthält.

Das Steuergerät 5 und der Sensor 6 senden ihre Anfragen und Steuerbefehle an das Kommunikationsmodul 4, welches die Busadresse der Komponenten 2a..2f aus der Netzwerkadresse extrahiert, die Anfragen und Steuerbefehle entsprechend dem Ressourcen-Pfad gegebenenfalls in DALI-konforme Anfragen und Steuerbefehle umwandelt und an die Komponenten 2a..2f mit der extrahierten Busadresse sendet. Bei Anfragen kann das Kommunikationsmodul 4 die Netzwerkadresse des Steuergeräts 5 bzw. des Sensors 6 aus den von dem Steuergerät 5 bzw. dem Sensor 6 empfangenen Daten ermitteln und die über den Datenbus 1 empfangene Antwort auf die Anfrage an die ermittelte Netzwerkadresse senden. Auf diese Weise sind zumindest einige der Komponenten 2a..2f von dem Steuergerät 5 und dem Sensor 6 wie ein Netzteilnehmer ansprechbar.

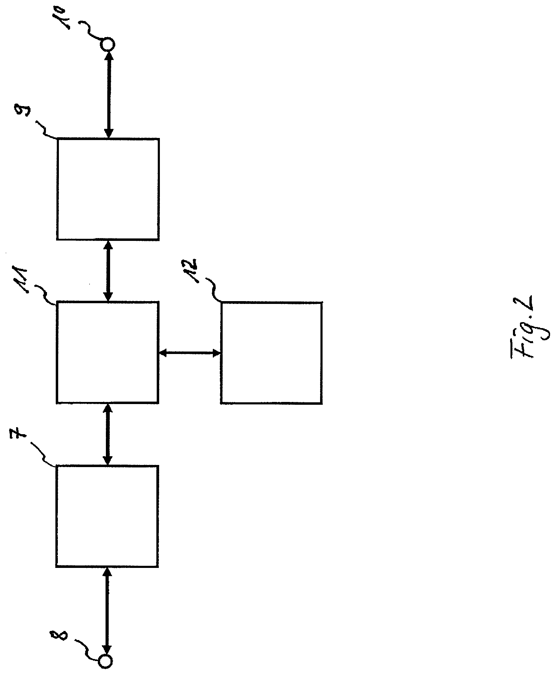

Fig. 2 zeigt eine vereinfachte Schaltung des Kommunikationsmoduls 4 nach einem Ausführungsbeispiel gemäß der vorliegenden Erfindung. Das in Fig. 2 gezeigte Kommunikationsmodul 4 weist eine Netzwerkschnittstelle 7, die über einen Anschluss 8 mit dem Netzwerk 3 verbindbar ist, eine Busschnittstelle 9, die mit dem Datenbus 1 verbindbar ist, eine Steuereinrichtung 11 und einen Datenspeicher 12 auf.

Die Steuereinrichtung 11 extrahiert die Busadresse und/oder die Anfragen bzw. Steuerbefehle aus den über die Netzwerkschnittstelle 7 aus dem Netzwerk 3 empfangenen Daten, wandelt die Anfragen bzw. Steuerbefehle mittels einer in dem Datenspeicher 12 gespeicherten Tabelle in DALI-konforme Anfragen und Steuerbefehle um und sendet diese über die Busschnittstelle 9 an die Komponente 2a..2f mit der extrahierten Busadresse. Dem Kommunikationsmodul 4 kann eine eigene eindeutige Busadresse zugeordnet sein und die Steuereinrichtung 11 kann die über den Datenbus 1 übertragenen Daten mittels der Busschnittstelle 9 erfassen und bestimmte Daten und/oder an bestimmte Busadressen gesendete Daten an das Steuergerät 5 und/oder den Sensor 6 weiterleiten. Hierzu sind zu bestimmten Daten bzw. bestimmten Busadressen spezielle Ressourcen "Callback URL" zugeordnet, mit deren Hilfe Netzwerkadressen gespeichert oder automatisch berechnet werden können. Eine solche Weiterleitung kann von dem Steuergerät 5 und/oder dem Sensor 6 mit Hilfe der Ressourcen "Callback URL" beauftragt werden.

In dem beschriebenen Beispiel sind lediglich ein Steuergerät 5 und ein Sensor 6 mit dem Netzwerk bzw. dem Kommunikationsmodul 4 verbunden. Es können jedoch eine Vielzahl von Steuergeräten 5, Sensoren 6 oder andere Geräte, wie Aktoren, Schalter oder Betriebsgeräte, mit dem Netzwerk 3 bzw. dem Kommunikationsmodul 4, auch gleichzeitig, verbunden sein.

Die Anfragen bzw. Steuerbefehle können sind im Ressourcen-Pfad des Zugriffs, in den Datenpaketen oder der Netzwerkadresse enthalten sein und/oder bereits DALI-konform vorliegen, so dass keine Umwandlung und kein Datenspeicher 12 nötig ist, um sie über den Datenbus 1 übertragen zu können. Die grafische Benutzerschnittstelle kann eine DALI-konforme oder die eines anderen Steuersystems sein.

Gemäß der vorliegenden Erfindung können nicht nur den Komponenten 2a..2f ein eindeutiger Identifikator (URI) in dem Netzwerk 3 zugeordnet werden, sondern auch deren abfragbare oder einstellbare Eigenschaften, so dass diese Eigenschaften über das Netzwerk 3 bzw. im Internet der Dinge (IdD) als Ressource/Ding verfügbar und ggf. mit anderen Ressourcen/Dingen verknüpfbar sind.

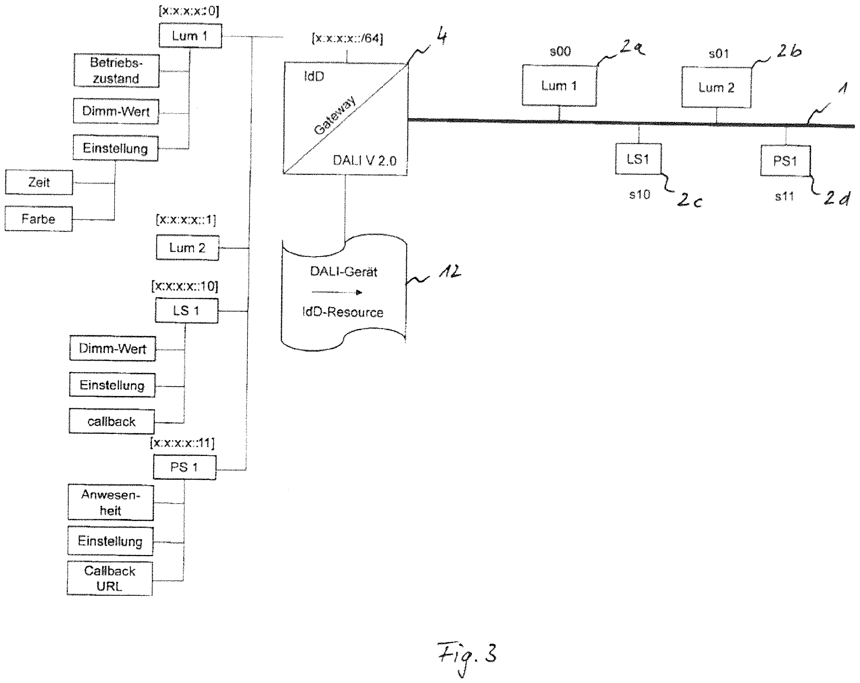

Fig. 3 zeigt eine schematische Darstellung eines solchen Beleuchtungssystems nach einem zweiten Ausführungsbeispiel gemäß der vorliegenden Erfindung. Bei dem in Fig. 3 gezeigten Beleuchtungssystem sind das mit dem Netzwerk 4 (nicht gezeigt) verbundene Kommunikationsmodul 4 und die Komponenten 2a..2f an den Datenbus 1 angekoppelt, wobei die Komponente 2a eine Leuchte "Lum 1" mit der Busadresse s00 ist, die Komponente 2b eine Leuchte "Lum 2" mit der Busadresse s01 ist, die Komponente 2c ein Dämmerungssensor "LS1" mit der Busadresse s10 ist und die Komponente 2d ein Bewegungsmelder "PS1" mit der Busadresse s11 ist.

In dem Beleuchtungssystem sind in einer in dem Datenspeicher 12 gespeicherten Tabelle die Eigenschaften der Komponenten 2a..2f hinterlegt, welche über das Netzwerk 4 als Ressourcen abfragbar und/oder einstellbar sein sollen.

Die netzseitig im Internet der Dinge (IdD) als verfügbaren Ressourcen/Dinge des in dem in Fig. 3 gezeigten Beleuchtungssystems sind rechts neben dem Kommunikationsmodul 4 in einer Verzeichnisstruktur mit der Netzwerkadresse angegeben.

Für die Leuchte "Lum 1" sind die Ressourcen "Betriebszustand", "Dimm-Wert" und die Einstellungen "Zeit" (Dimm-Geschwindigkeit) und "Farbe" (Farbtemperatur) verfügbar. Der Leuchte "Lum 1" ist die Netzwerkadresse "x:x:x:x::0" zugeordnet, wobei die "0" der Busadresse s00 entspricht. Das Kommunikationsmodul 4 ist ein Gateway zum Teilnetz (Subnet) "x:x:x:x::/64" des Netzwerks 3 und kann auch eine eigene Adresse in diesem Subnet zu Konfigurationszwecken haben.

Der Bewegungsmelder "PS1" kann als eine Eigenschaft die oben beschriebene "DALI-Event-Message" an eine vorgegebene Busadresse senden, wobei in der IdD-Repräsentation die "DALI-Event-Message" an eine "Callback URL" weitergeleitet wird, die über eine entsprechende Ressource über das Netzwerk gesetzt werden kann.

Das Kommunikationsmodul ist dazu ausgebildet, die Betriebsgeräte am Bussystem 1 automatisch zu erkennen. Mit Hilfe einer im Datenspeicher 12 hinterlegten Übersetzungstabelle werden die von den Betriebsgeräten bereitgestellten Services in Netzwerkressourcen übersetzt. Auch dies erfolgt automatisch. Diese Ressourcen können über das Netzwerk 3 angesprochen werden, um Daten der Betriebsgeräte abzufragen oder Befehle an Geräte zu senden um somit die Konfiguration der Geräte zu ändern. Somit kann transparent auf die Betriebsgeräte zugegriffen werden, ohne dass spezifische Befehle bekannt sein müssen. Auch das angeschlossene Bussystem 1 wird somit für einen Zugriff aus dem Rechnernetz völlig irrelevant.

Das Kommunikationsmodul ist so ausgebildet, dass über eine "allgemeine bekannte Adresse" Informationen über die bereitgestellten Ressourcen abgefragt werden können. Über diesen Weg kann ein externes Gerät 5 ohne Vorkenntnisse alle Informationen über das Bussystem und die angeschlossenen Betriebsgeräte ermitteln. Diese Informationen werden als hierarchisch organisierte Ressourcen-Pfade zur Verfügung gestellt, wobei zu jeder Ressource auch der Datentyp abgefragt werden kann.

In dem Beispiel der Fig. 3 sind vier Betriebsgeräte als Komponenten 2a..2d an dem Bussystem 1 angeschlossen und haben eine spezifische Bus-Adresse erhalten (s00...s11). Das Betriebsgerät scannt das Bussystem und ermittelt die Typen und Adressen der angeschlossenen Betriebsgeräte. Die Busadresse im Bussystem, z.B. s00 für das Gerät Lum1 wird in eine IPv6-Adresse übersetzt: x:x:x:x:x::0. Dann werden die von den Betriebsgeräten 2a..2d zur Verfügung gestellten Services mit Hilfe der im Datenspeicher 12 hinterlegten Informationen ermittelt. Diese werden in Ressourcen-Pfade übersetzt, z.B. /Einstellung/Farbe. Die Kombination Netzwerkadresse/Ressourcen-Pfad bildet somit die URL, über den ein Service eines Betriebsgerätes genutzt werden kann. Der aktuelle Farbwert von Lum1 kann beispielsweise über x:x:x:x:x::0/Einstellung/Farbe abgefragt bzw. geändert werden.

Das Kommunikationsmodul kann dazu ausgelegt sein, eine Aufteilung von aus dem Netzwerk 3 gesendeten Daten auf mehrere DALI-Buszugriffe vorzunehmen, beispielsweise bei komplexen Ressourcen. Auf diese Weise kann es ermöglicht werden, komplexe Ressourcen wie beispielsweise ein Rücksetzen (Reset) des Datenbusses 1, das Auslesen von Wertetabellen von einzelnen oder auch einer Mehrzahl von Komponenten 2a..2d, eine Durchführung eines Firmware-Updates für einzelne oder auch eine Mehrzahl von Komponenten 2a..2d.

Das Kommunikationsmodul kann dazu ausgelegt sein, eine Zwischenspeicherung von aus dem Netzwerk 3 gesendeten Daten vorzunehmen. Das Kommunikationsmodul kann auch dazu ausgelegt sein, eine Verifikation der an die Komponenten 2a..2f übertragenen Daten vorzunehmen.

Das Netzwerk 3 kann dazu ausgelegt sein, dass der Timeout für das Protokoll des Netzwerkes 3 konfigurierbar ausgelegt sein kann. Beispielsweise kann das Kommunikationsmodul dazu ausgelegt sein, den Timeout-Parameter des Netzwerkes 3 anhand des Typs des angeschlossenen Datenbusses 1 oder anhand der Anzahl oder auch Art der an den Datenbus 1 angeschlossenen Komponenten 2a..2f festzulegen.

Mit Hilfe der Erfindung wird mittels einer Adressübersetzung so beispielsweise verschiedenen Arten von Zugriffen auf einzelne oder auch eine Mehrzahl von Komponenten 2a..2d durchführbar, beispielsweise auf einzelne (Unicast), mehrere (Multicast) oder auf die Gesamtheit (Broadcast).

Die angegebenen Eigenschaften und Ressourcen sind selbstverständlich lediglich Beispiele und demselben Schema folgend können weitere und/oder andere Ressourcen und Eigenschaften definiert sein.

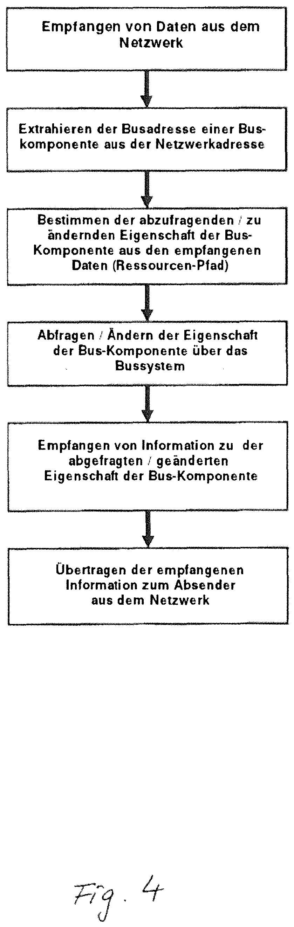

Fig. 4 zeigt ein vereinfachtes Diagramm zur Darstellung des Verfahrens gemäß eines Ausführungsbeispiels, bei dem die vorstehend bereits erläuterten Verfahrensschritte noch einmal in einem eigenen Flussdiagramm dargestellt sind.

Gemäß dieses Ausführungsbeispiels weist ein Verfahren zum Übertragen von Daten zwischen zumindest einer an einem Beleuchtungs-Bussystem angekoppelten Komponente 2a..2f und einem Teilnehmer eines auf einem Internetprotokoll basierenden Netzwerks 3, bei dem das Bussystem über eine Schnittstelle an das Netzwerk 3 angekoppelt ist, jeder an dem Bussystem 1 angekoppelten Komponente 2a..2f eine eindeutige Busadresse zugeordnet ist, der Schnittstelle mehrere Netzwerkadressen zugeordnet sind und zumindest eine der mehreren Netzwerkadressen die Busadresse einer Komponente enthält, die Schritte:
- Empfangen von aus dem Netzwerk an die zumindest eine Netzwerkadresse gesendeten Daten von der Schnittstelle,
- Extrahieren der Busadresse der Komponente 2a..2f aus der Netzwerkadresse,
- Bestimmen der der angeforderten Ressource (URL) zugeordneten Eigenschaft (Service) der Komponente mit Hilfe einer Übersetzungs-Tabelle,
- Ermitteln von an die Komponente 2a..2f mit der extrahierten Busadresse zu sendenden Daten auf der Grundlage der empfangenen Daten und der angefragten Ressource, und
- Übertragen der ermittelten Daten an die Komponente 2a..2f mit der extrahierten Busadresse über das Bussystem auf.

Dabei kann eine in dem Bussystem abfragbare Eigenschaft zumindest einer Komponente 2a..2f eine über das Netzwerk 3 zugängliche Ressource darstellen, die über einen URL erreichbar ist, die empfangenen Daten können eine Anfrage der Ressource von einem Netzteilnehmer 5, 6 enthalten, und das Verfahren die folgenden Schritte aufweisen:
Bestimmen der angefragten Ressource in einer Tabelle zugeordneten Eigenschaft der Komponente 2a..2f,
Empfangen von Informationen zu der in der Datenübertagung abgefragten Eigenschaft von der Komponente 2a..2f,
Erzeugen eines Datenpakets mit den empfangenen Informationen, und
Senden des Datenpakets an die Netzwerkadresse des Netzteilnehmers 5, 6.

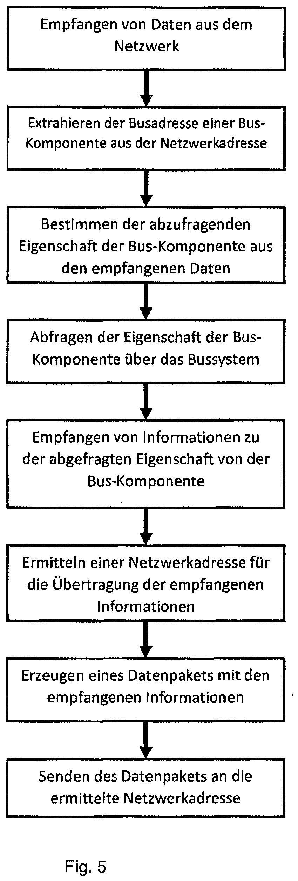

Fig. 5 zeigt ein vereinfachtes Diagramm zur Darstellung des Verfahrens gemäß eines weiteren Ausführungsbeispiels, bei dem die vorstehend bereits erläuterten Verfahrensschritte noch einmal in einem eigenen Flussdiagramm dargestellt sind.

Es kann zumindest eine in dem Bussystem abfragbare Eigenschaft zumindest einer Komponente stellt eine über das Netzwerk zugängliche Ressource darstellen, die über einen URL erreichbar, wobei wenn die empfangenen Daten eine Anfrage der Ressource von einem Netzteilnehmer enthalten, in dem Verfahren folgende Schritte ausgeführt werden:
- Bestimmen der der angefragten Ressource in einer Tabelle zugeordneten Eigenschaft der Komponente,
- Empfangen von Informationen zu der in der Datenübertagung abgefragten Eigenschaft von der Komponente,
- Erzeugen eines Datenpakets mit den empfangenen Informationen,
- Ermitteln einer Netzwerkadresse für die Übertragung der Daten auf der Grundlage der empfangenen Daten, und
- Senden des Datenpakets an die ermittelte Netzwerkadresse.

## Patentansprüche

1. Kommunikationsmodul zum Verbinden eines Beleuchtungs-Bussystems (1) mit einem auf einem Internetprotokoll basierenden Netzwerk (3), wobei
zumindest eine in dem Bussystem abfragbare Eigenschaft zumindest einer an das Bussystem angekoppelten Komponente (2a..2f) eine über das Netzwerk (3) zugängliche Ressource darstellt, die über einen Uniform Resource Locator URL erreichbar ist und
das Kommunikationsmodul (4) dazu ausgebildet ist, wenn über das Netzwerk (3) empfangene Daten eine Anfrage der Ressource enthalten, die der angefragten Ressource in einer Übersetzungs-Tabelle zugeordnete Eigenschaft der Komponente (2a..2f) zu bestimmen,
wobei
das Kommunikationsmodul (4) dazu ausgebildet ist, die Eigenschaft in einer Datenübertragung über das Bussystem von der zumindest einen Komponente (2a..2f) abzufragen, **dadurch gekennzeichnet, dass**
das Bussystem (1) ein Digital Addressable Lighting Interface DALI-Bus ist,
das Kommunikationsmodul (4) dazu ausgebildet ist, eine von der zumindest einen Komponente (2a..2f) über das Bussystem gesendeten DALI-Event-Message zu empfangen, eine der DALI-Event-Message in der Übersetzungs-Tabelle als Ressource zugeordnete callback URL zu bestimmen und die DALI-Event-Message an die callback URL weiterzuleiten.

2. Kommunikationsmodul nach Anspruch 1, wobei
das Kommunikationsmodul (4) dazu ausgebildet ist, ein Datenpaket mit von der Komponente empfangenen Informationen zu der abgefragten Eigenschaft zu erzeugen, eine Netzwerkadresse für die Übertragung des Datenpakets auf der Grundlage der empfangenen Daten zu ermitteln und das Datenpaket an die ermittelte Netzwerkadresse zu senden.

3. Kommunikationsmodul nach Anspruch 1 oder 2, wobei
jeder Komponente (2a..2f) mit zumindest einer abfragbaren Ressource eine Übersetzungs-Tabelle zugeordnet ist, welche der netzwerkseitig abfragbaren Ressource zumindest eine von der Komponente (2a..2f) abfragbare Eigenschaft zuordnet und das Kommunikationsmodul (4) dazu ausgebildet ist, für die abgefragte Ressource mittels der Übersetzungs-Tabelle die zumindest eine abzufragende Eigenschaft zu bestimmen.

4. Kommunikationsmodul nach Anspruch 1, 2 oder 3,, wobei
das Kommunikationsmodul (4) dazu ausgebildet ist, zumindest eine von einer Komponente (2a..2f) zu einem bestimmten Ereignis an eine bestimmte Busadresse über das Bussystem (1) gesendete Nachricht zu detektieren, eine der bestimmten Busadresse, dem bestimmten Ereignis und/oder der Nachricht in einer Tabelle zugeordneten Netzwerkadresse zu bestimmen und die Nachricht an die bestimmte Netzwerkadresse zu senden.

5. Kommunikationsmodul nach einem der Ansprüche 1 bis 4, wobei
jeder an dem Bussystem (1) angekoppelten Komponente (2a..2f) eine eindeutige Busadresse zugeordnet ist,
dem Kommunikationsmodul (4) mehrere Netzwerkadressen zugeordnet sind,
zumindest eine der mehreren Netzwerkadressen die Busadresse einer Komponente (2a..2f) enthält und
das Kommunikationsmodul (4) dazu ausgebildet ist, an die zumindest eine Netzwerkadresse gesendeten Daten aus dem Netzwerk (3) zu empfangen, die Busadresse der Komponente (2a..2f) aus der Netzwerkadresse zu extrahieren, an die Komponente (2a..2f) mit der extrahierten Busadresse zu sendende Daten auf der Grundlage der Ressource und / oder den empfangenen Daten zu ermitteln und die ermittelten Daten an die Komponente (2a..2f) mit der extrahierten Busadresse über das Bussystem (1) zu übertragen, oder die von einer Komponente (2a..2f) autonom erzeugten und an das Kommunikationsmodul (4) gesendeten Daten über das Netzwerk (3) zumindest einem Netzteilnehmer zur Verfügung zu stellen.

6. Kommunikationsmodul nach Anspruch 5, wobei
das Kommunikationsmodul (4) dazu ausgebildet ist, die Adresse der Komponente (2a..2f) aus dem Interface-Identifier der auf dem Internet Protocol Version 6 basierenden Netzwerkadresse, zu extrahieren.

7. Kommunikationsmodul nach Anspruch 6, wobei
in dem Bussystem mehrere Komponenten (2a..2f) mittels einer Gruppen-Busadresse adressierbar sind und das Kommunikationsmodul (4) dazu ausgebildet ist, die Gruppen-Busadresse auf der Grundlage einer in der Netzwerkadresse enthaltenen Multicast-Adresse zu ermitteln und eine Datenübertagung an die der ermittelten Gruppen-Busadresse zugehörigen Komponenten (2a..2f) auf der Grundlage der empfangenen Daten und / oder Ressource durchzuführen.

8. Kommunikationsmodul nach einem der Ansprüche 5 bis 7, wobei
das Kommunikationsmodul (4) dazu ausgebildet ist, aus der Ressource der empfangenen Daten einen Steuerbefehl zu ermitteln und den ermittelten Steuerbefehl an die Komponente (2a..2f) mit der extrahierten Busadresse bzw. die Komponenten (2a..2f) mit der ermittelten Gruppen-Busadresse zu senden.

9. Kommunikationsmodul nach einem der Ansprüche 5 bis 8, wobei
das Kommunikationsmodul (4) dazu ausgebildet ist, als ein Gateway eine Umwandlung des Datenpaketformats der empfangenen Daten in das Datenpaketformat des Bussystems durchzuführen.

10. Beleuchtungssystem mit einem Bussystem, mehreren an dem Bussystem (1) angekoppelten Komponenten (2a..2f) und dem Kommunikationsmodul (4) nach einem der Ansprüche 1 bis 9.

11. Beleuchtungssystem nach Anspruch 10, wobei das Bussystem (1) ein Digital Addressable Lighting Interface DALI-Bus ist.

12. Verfahren zum Übertragen von Daten zwischen zumindest einer an einem Beleuchtungs-Bussystem (1) angekoppelten Komponente (2a..2f) und einem Teilnehmer (5, 6) eines auf einem Internetprotokoll basierenden Netzwerks (3), wobei
zumindest eine in dem Bussystem abfragbare Eigenschaft zumindest einer Komponente (2a..2f) eine über das Netzwerk (3) zugängliche Ressource darstellt, die über einen Uniform Resource Locator URL erreichbar ist, und das Verfahren die Schritte aufweist:
Empfangenen von Daten über das Netzwerk (3), die eine Anfrage der Ressource von einem Netzteilnehmer (5, 6) enthalten und
Bestimmen der der angefragten Ressource in einer Übersetzungs-Tabelle zugeordneten Eigenschaft der Komponente (2a..2f),
Empfangen von Informationen zu der in der Datenübertagung abgefragten Eigenschaft von der Komponente (2a..2f),
Erzeugen eines Datenpakets mit den empfangenen Informationen,
Ermitteln einer Netzwerkadresse für die Übertragung des Datenpakets auf der Grundlage der empfangenen Daten, und
Senden des Datenpakets an die ermittelte Netzwerkadresse, **dadurch gekennzeichnet, dass** das Verfahren zusätzlich die Schritte aufweist:
das Bussystem (1) ein Digital Addressable Lighting Interface DALI-Bus ist,
das Kommunikationsmodul (4) einer von der zumindest einen Komponente (2a..2f) über das Bussystem gesendeten DALI-Event-Message empfängt, eine der DALI-Event-Message in der Übersetzungs-Tabelle als Ressource zugeordnete callback URL bestimmt und die DALI-Event-Message an die callback URL weiterleitet.

13. Verfahren nach Anspruch 12, wobei
jeder an dem Bussystem (1) angekoppelten Komponente (2a..2f) eine eindeutige Busadresse zugeordnet ist, das Bussystem (1) über eine Schnittstelle (4; 7..12), der mehrere Netzwerkadressen zugeordnet sind, an das Netzwerk (3) angekoppelt ist, zumindest eine der mehreren Netzwerkadressen die Busadresse einer Komponente (2a..2f) enthält und das Verfahren ferner die Schritte aufweist:
Empfangen von aus dem Netzwerk (3) an die zumindest eine Netzwerkadresse gesendeten Daten von der Schnittstelle (4; 7...12),
Extrahieren der Busadresse der Komponente (2a..2f) aus der Netzwerkadresse,
Ermitteln von an die Komponente mit der extrahierten Busadresse zu sendenden Daten auf der Grundlage der Ressource und / oder der empfangenen Daten, und
Übertragen der ermittelten Daten an die Komponente mit der extrahierten Busadresse über das Bussystem.

## Claims

1. Communication module for connecting a lighting bus system (1) to a network (3) based on an internet protocol, wherein
at least one property of at least one component (2a..2f) coupled to the bus system, which property can be queried in the bus system, represents a resource that is accessible via the network (3) and can be reached via a URL, and
the communication module (4) is designed, when data received via the network (3) contain a query for the resource, to determine the property of the component (2a..2f) that is associated with the queried resource in a translation table, wherein
the communication module (4) is designed to query the property in a data transmission via the bus system from the at least one component (2a..2f), **characterized in that**
the bus system (1) is a Digital Addressable Lighting Interface DALI Bus,
the communication module (4) is designed to receive a DALI event message transmitted by the at least one component (2a..2f) via the bus system, to determine a callback URL associated with the DALI event message in the translation table as a resource, and to forward the DALI event message to the callback URL.

2. Communication module according to Claim 1, wherein
the communication module (4) is designed to generate a data packet having information received from the component regarding the queried property, to determine a network address for the transmission of the data packet on the basis of the received data, and to transmit the data packet to the determined network address.

3. Communication module according to either Claim 1 or Claim 2, wherein
a translation table is associated with each component (2a..2f) having at least one queryable resource, which translation table associates at least one property that can be queried by the component (2a..2f) with the resource that can be queried on the network side, and the communication module (4) is designed to determine the at least one property to be queried for the queried resource by means of the translation table.

4. Communication module according to Claims 1, 2, or 3, wherein
the communication module (4) is designed to detect at least one message transmitted by a component (2a..2f) to a specific bus address via the bus system (1) regarding a specific event, to determine a network address associated with the specific bus address, the specific event, and/or the message in a table, and to transmit the message to the specific network address.

5. Communication module according to any of Claims 1 to 4, wherein
a unique bus address is associated with each component (2a..2f) coupled to the bus system (1),
a plurality of network addresses are associated with the communication module (4),
at least one of the plurality of network addresses contains the bus address of a component (2a..2f), and
the communication module (4) is designed to receive data transmitted to the at least one network address from the network (3), to extract the bus address of the component (2a..2f) from the network address, to determine data to be transmitted to the component (2a..2f) having the extracted bus address on the basis of the resource and/or the received data, and to transmit the determined data to the component (2a..2f) having the extracted bus address via the bus system (1), or to provide the data generated autonomously by a component (2a..2f) and transmitted to the communication module (4) to at least one network subscriber via the network (3).

6. Communication module according to Claim 5, wherein
the communication module (4) is designed to extract the address of the component (2a..2f) from the interface identifier of the network address based on Internet Protocol version 6.

7. Communication module according to Claim 6, wherein
in the bus system, a plurality of components (2a..2f) are addressable by means of a group bus address, and the communication module (4) is designed to determine the group bus address on the basis of a multicast address contained in the network address, and to implement a data transmission to the components (2a..2f) belonging to the determined group bus address on the basis of the received data and/or resource.

8. Communication module according to any of Claims 5 to 7, wherein
the communication module (4) is designed to determine a control command from the resource of the received data, and to transmit the determined control command to the component (2a..2f) having the extracted bus address, or to the components (2a..2f) having the determined group bus address.

9. Communication module according to any of Claims 5 to 8, wherein
the communication module (4) is designed to implement a conversion of the data packet format of the received data into the data packet format of the bus system as a gateway.

10. Lighting system having a bus system, a plurality of components (2a..2f) coupled to the bus system (1), and the communication module (4) according to any of Claims 1 to 9.

11. Lighting system according to Claim 10, wherein the bus system (1) is a Digital Addressable Lighting Interface DALI bus.

12. Method for transmitting data between at least one component (2a..2f) coupled to a lighting bus system (1) and a subscriber (5, 6) of a network (3), based on an Internet protocol, wherein
at least one property of at least one component (2a..2f), which property can be queried in the bus system, represents a resource that is accessible via the network (3) and can be reached via a uniform resource locator URL, and the method comprises the following steps:
receiving data via the network (3) that contain a query for the resource from a network subscriber (5, 6) and
determining the property of the component (2a..2f) that is associated with the queried resource in a translation table,
receiving, from the component (2a..2f), information regarding the property that was queried in the data transmission,
generating a data packet with the received information,
determining a network address for the transmission of the data packet on the basis of the received data, and
transmitting the data packet to the determined network address, **characterized in that** the method additionally comprises the following steps:
the bus system (1) is a Digital Addressable Lighting Interface DALI Bus,
the communication module (4) receives a DALI event message transmitted by the at least one component (2a..2f) via the bus system, determines a callback URL associated with the DALI event message in the translation table as a resource, and forwards the DALI event message to the callback URL.

13. Method according to Claim 12, wherein
a unique bus address is associated with each component (2a..2f) coupled to the bus system (1), the bus system (1) is coupled to the network (3) via an interface (4; 7..12), with which a plurality of network addresses are associated, at least one of the plurality of network addresses contains the bus address of a component (2a..2f), and the method further comprises the following steps:
receiving, from the interface (4; 7..12), data transmitted from the network (3) to the at least one network address,
extracting the bus address of the component (2a..2f) from the network address,
determining data to be transmitted to the component having the extracted bus address on the basis of the resource and/or the received data, and
transmitting the determined data to the component having the extracted bus address via the bus system.

## Revendications

1. Module de communication permettant la connexion d'un système de bus (1) d'éclairage à un réseau (3) basé sur un protocole Internet, dans lequel
au moins une propriété pouvant être interrogée dans le système de bus d'au moins un composant (2a..2f) couplé au système de bus représente une ressource accessible par l'intermédiaire du réseau (3) et pouvant être atteinte par l'intermédiaire d'un localisateur de ressources uniforme, URL, et
le module de communication (4) est configuré pour, lorsque des données reçues par l'intermédiaire du réseau (3) contiennent une demande de la ressource, déterminer la propriété du composant (2a..2f) attribuée à la ressource demandée dans un tableau de traduction, dans lequel
le module de communication (4) est configuré pour interroger la propriété de l'au moins un composant (2a..2f) dans une transmission de données par l'intermédiaire du système de bus, **caractérisé en ce que**
le système de bus (1) est un bus d'interface numérique d'éclairage adressable, DALI,
le module de communication (4) est configuré pour recevoir un message d'événement DALI envoyé par l'au moins un composant (2a..2f) par l'intermédiaire du système de bus, pour déterminer un URL de rappel associé au message d'événement DALI dans le tableau de traduction en tant que ressource et pour rediriger le message d'événement DALI vers l'URL de rappel.

2. Module de communication selon la revendication 1, dans lequel
le module de communication (4) est configuré pour générer un paquet de données comportant des informations reçues depuis le composant concernant la propriété interrogée, pour définir une adresse réseau pour la transmission du paquet de données sur la base des données reçues et pour envoyer le paquet de données à l'adresse réseau définie.

3. Module de communication selon la revendication 1 ou 2, dans lequel
un tableau de traduction est associé à chaque composant (2a..2f) comportant au moins une ressource pouvant être interrogée, lequel tableau associe au moins une propriété pouvant être interrogée par le composant (2a..2f) à la ressource pouvant être interrogée côté réseau et le module de communication (4) est configuré pour déterminer l'au moins une propriété à interroger pour la ressource interrogée au moyen du tableau de traduction.

4. Module de communication selon la revendication 1, 2 ou 3, dans lequel
le module de communication (4) est configuré pour détecter au moins un message envoyé par un composant (2a..2f) à un événement déterminé à une adresse de bus déterminée par l'intermédiaire du système de bus (1), pour déterminer une adresse réseau associée à l'adresse de bus déterminée, à l'évènement déterminé et/ou au message dans un tableau et pour envoyer le message à l'adresse réseau déterminée.

5. Module de communication selon l'une des revendications 1 à 4, dans lequel
une adresse de bus univoque est associée à chaque composant (2a..2f) couplé au système de bus (1),
plusieurs adresses réseau sont associées au module de communication (4),
au moins l'une des plusieurs adresses réseau contient l'adresse de bus d'un composant (2a..2f) et
le module de communication (4) est configuré pour recevoir des données envoyées à l'au moins une adresse réseau en provenance du réseau (3), pour extraire l'adresse de bus du composant (2a..2f) de l'adresse réseau, pour définir des données à envoyer au composant (2a..2f) avec l'adresse de bus extraite sur la base de la ressource et/ou des données reçues et pour transmettre, par l'intermédiaire du système de bus (1), les données définies au composant (2a..2f) avec l'adresse de bus extraite ou pour fournir les données générées de manière autonome par un composant (2a..2f) et envoyées au module de communication (4) à au moins un abonné au réseau par l'intermédiaire du réseau (3).

6. Module de communication selon la revendication 5, dans lequel
le module de communication (4) est configuré pour extraire l'adresse du composant (2a..2f) de l'identifiant d'interface de l'adresse réseau basée sur le protocole Internet version 6.

7. Module de communication selon la revendication 6, dans lequel
dans le système de bus, plusieurs composants (2a..2f) peuvent être adressés au moyen d'une adresse de bus de groupe et le module de communication (4) est configuré pour définir l'adresse de bus de groupe sur la base d'une adresse de multidiffusion contenue dans l'adresse réseau et pour réaliser une transmission de données aux composants (2a..2f) appartenant à l'adresse de bus de groupe définie sur la base des données reçues et/ou de la ressource.

8. Module de communication selon l'une des revendications 5 à 7, dans lequel
le module de communication (4) est configuré pour définir, à partir de la ressource des données reçues, une instruction de commande et pour envoyer l'instruction de commande définie au composant (2a..2f) avec l'adresse de bus extraite ou aux composants (2a..2f) avec l'adresse de bus de groupe définie.

9. Module de communication selon l'une des revendications 5 à 8, dans lequel
le module de communication (4) est configuré pour réaliser, sous forme d'une passerelle, une conversion du format de paquet de données des données reçues en format de paquet de données du système de bus.

10. Système d'éclairage comportant un système de bus, plusieurs composants (2a..2f) couplés au système de bus (1) et le module de communication (4) selon l'une des revendications 1 à 9.

11. Système d'éclairage selon la revendication 10, dans lequel le système de bus (1) est un bus d'interface numérique d'éclairage adressable, DALI.

12. Procédé permettant la transmission de données entre au moins un composant (2a..2f) couplé à un système de bus (1) d'éclairage et un abonné (5, 6) à un réseau (3) basé sur un protocole Internet, dans lequel
au moins une propriété pouvant être interrogée dans le système de bus d'au moins un composant (2a..2f) représente une ressource accessible par l'intermédiaire du réseau (3) et pouvant être atteinte par l'intermédiaire d'un localisateur de ressources uniforme, URL, et le procédé présente les étapes de :
réception de données par l'intermédiaire du réseau (3), lesquelles contiennent une requête de la ressource en provenance d'un abonné au réseau (5, 6) et
détermination de la propriété du composant (2a..2f) associée à la ressource demandée dans un tableau de traduction,
réception d'informations concernant la propriété interrogée dans la transmission de données en provenance du composant (2a..2f),
génération d'un paquet de données comportant les informations reçues,
définition d'une adresse réseau pour la transmission du paquet de données sur la base des données reçues, et
envoi du paquet de données à l'adresse réseau définie, **caractérisé en ce que** le procédé présente en outre les étapes de :
le système de bus (1) est un bus d'interface numérique d'éclairage adressable, DALI,
le module de communication (4) reçoit un message d'événement DALI envoyé par l'au moins un composant (2a..2f) par l'intermédiaire du système de bus, détermine un URL de rappel associé au message d'événement DALI dans le tableau de traduction en tant que ressource et redirige le message d'événement DALI vers l'URL de rappel.

13. Procédé selon la revendication 12, dans lequel
une adresse de bus univoque est associée à chaque composant (2a..2f) couplé au système de bus (1), le système de bus (1) est couplé au réseau (3) par l'intermédiaire d'une interface (4 ; 7.. 12) à laquelle sont associées plusieurs adresses réseau, au moins l'une des plusieurs adresses réseau contient l'adresse de bus d'un composant (2a.. 2f) et le procédé présente en outre les étapes de :
réception de données envoyées à partir du réseau (3) à l'au moins une adresse réseau depuis l'interface (4 ; 7...12),
extraction de l'adresse de bus du composant (2a..2f) de l'adresse réseau,
définition de données à envoyer au composant avec l'adresse de bus extraite sur la base de la ressource et/ou des données reçues, et
transmission des données définies au composant avec l'adresse de bus extraite par l'intermédiaire du système de bus.
